# EUROPEAN PATENT SPECIFICATION

(11) **EP 1 473 269 B1**
(45) Date of publication and mention of the grant of the patent: **19.11.2008**
(21) Application number: 04396031.9
(22) Date of filing: 28.04.2004
(51) Int. Cl.: B66F 7/04

(54) **Lifting device for an intermediate platform**
Hebevorrichtung für eine Plattform
Dispositif élévateur pour plate-forme

(30) Priority: 30.04.2003 FI 20030653
(43) Date of publication of application: 03.11.2004
(73) Proprietor: Vak Oy, 21310 Vahto (FI)
(72) Inventor: Virtanen, Lassi, 21310 Vahto (FI)
(74) Representative: Pirhonen, Kari Lennart

(56) References cited:
- FR-A- 2 823 735
- NL-A- 7 513 777
- US-B1- 6 550 584

## Description

### SUBJECT OF THE INVENTION

The present invention relates to an intermediate platform device which can be lifted to a desired height in a cargo container, such as the cargo container of a truck or trailer, said intermediate platform device comprising
- an actual platform part , on which the objects are to be loaded,
- horizontal beams mounted in conjunction with the platform part and supporting the platform part,
- and a lifting device comprising hoisting wire ropes and a hydraulic actuator, such as a hydraulic cylinder, serving to move the sheaves of the hoisting wire ropes.

### PRIOR ART

A platform device is disclosed in US-B-6 550 584.

In a prior-art cargo container solution, the hydraulic cylinder of an intermediate platform lifting device is disposed inside the intermediate platform. The hydraulic pump operating the hydraulic cylinder may be placed separately e.g. under the cargo container. However, the hydraulic cylinder placed inside the cargo container takes up such a large space that the intermediate platform has to be made thicker than its structural strength would require. However, a thick intermediate platform correspondingly reduces the height of the available load space. The same problem regarding space is also encountered when the hydraulic cylinder is attached to the top of the cargo container. Due to the reduced height of the load space, tall loads can not be placed both on the bottom of the cargo container and on the intermediate platform.

### OBJECT OF THE INVENTION

The object of the present invention is to achieve a new intermediate platform device that does not have the drawbacks described above.

### FEATURES OF THE INVENTION

The intermediate platform device of the invention is characterized in
- that the actual platform part, on which the objects are to be loaded, is substantially a thin plate,
- that the lifting device comprising the hydraulic actuator, such as a hydraulic cylinder, is located at the edge of the platform part in a box , which has the height dimension substantially greater than the thickness of the platform part,
- and that the box at the edge of the platform part forms a horizontal beam supporting the thin platform part.

In the presented solution, the hydraulic cylinder of the intermediate platform lifting device is not placed inside the intermediate platform but beside it, so the intermediate platform can be made very thin. A thin intermediate platform is an essential solution because it allows considerably more objects of a large height to be loaded in the cargo container. This is because tall objects can be placed in two tiers in the cargo container, a first tier on the bottom and a second tier on the intermediate platform. If the intermediate platform were thicker, then it would only allow considerably fewer tall objects to be placed in the cargo container, i.e. in only one tier.

### EMBODIMENTS OF THE LIFTING DEVICE

A preferred embodiment of the device of the invention is characterized in
- at the opposite edges, on both sides of the substantially thin platform part and attached to it there are horizontal beams, which have the height dimension substantially greater than the thickness of the platform part,
- that inside the box of the first high horizontal beam there is a hydraulic actuator of the lifting device of the intermediate platform, such as a hydraulic cylinder,
- and that the box of the second high horizontal beam at the opposite edge of the platform part is a load-bearing beam supporting the actual platform part.

As the intermediate platform in this solution has load-bearing horizontal beams at its two opposite edges, the intermediate platform can be made still thinner. Due to the load-bearing beams, even a thin intermediate platform has a good load-bearing capacity.

### EMBODIMENT EXAMPLES

In the following, the invention will be described with reference to a few examples and the attached drawings, wherein

### LIST OF FIGURES

- Fig. 1: a cross-sectional side view of a cargo container with an intermediate platform according to the invention and its lifting device in a low position.
- Fig. 2: corresponds to Fig. 1 and presents the intermediate platform lifted through a distance above the bottom.
- Fig. 3: corresponds to Fig. 1 and presents the intermediate platform lifted to its upper position.
- Fig. 4: presents a cross-sectional end view of the cargo container, intermediate platform and lifting device in a situation corresponding to Fig. 2.

### DESCRIPTION OF THE FIGURES

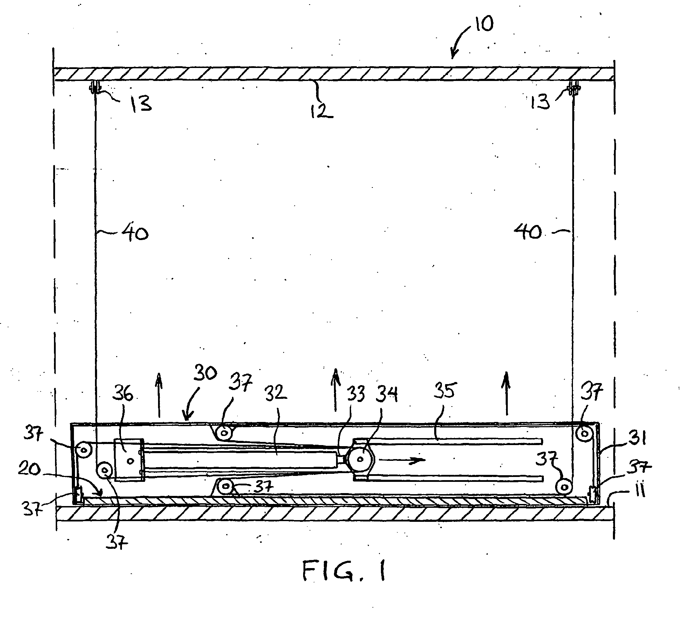

Fig. 1 presents a cross-sectional side view of a part of a cargo container 10 with an intermediate platform 20 and an intermediate platform lifting device 30 inside it. The intermediate platform 20 in Fig. 1 is in its low position on the bottom 11 of the cargo container 10. The intermediate platform 20 lifting device 30 comprises a horizontal box 31 or beam 31 connected to the intermediate platform 20 and provided with a hydraulic actuator, i.e. hydraulic cylinder 32 placed inside it. Mounted at the end of the piston 33 of the hydraulic cylinder 32 are the sheaves 34 of hoisting wire ropes 40, said sheaves moving with the piston 33 along guide rails 35. The hoisting wire ropes 40 secured to a holding block 36 at the foot of the hydraulic cylinder 32 are passed over the sheaves 34 at the end of the piston 33 to auxiliary sheaves 37 and further to anchorages 13 in the top 12 of the cargo container 10. When the piston 33 of the hydraulic cylinder 32 and the sheaves 34 mounted at its end are moved to the right in Fig. 1, the lifting device 30 and the intermediate platform 20 connected to it will rise upwards.

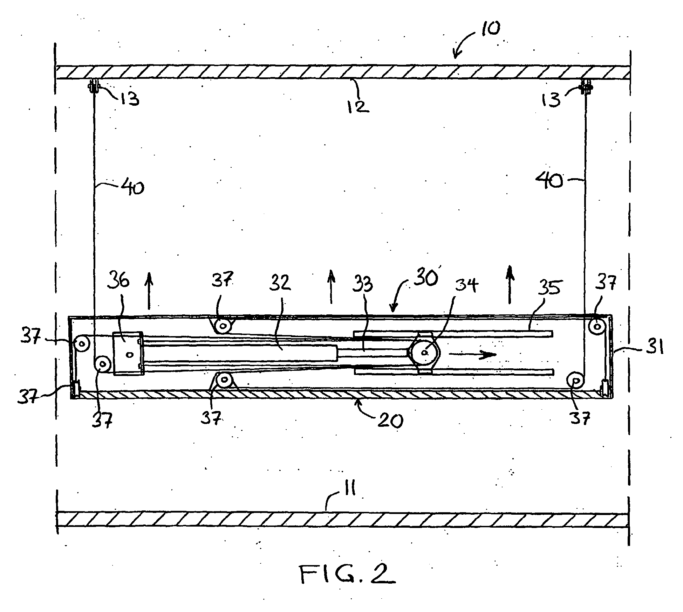

In Fig. 2, the piston 33 of the hydraulic cylinder 32 of the lifting device 30 has been partially pushed out. Thus, the sheaves 34 mounted at the end of the piston 33 have also moved along the guide rails 35 to the right in Fig. 2. As shown in the figure, the lifting device 30 and the intermediate platform 20 connected to it have also risen upwards.

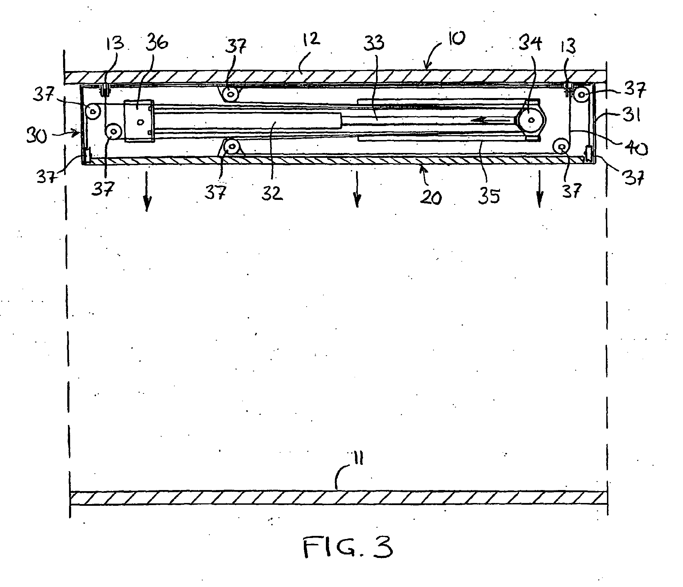

In Fig. 3, the piston 33 of the hydraulic cylinder 32 of the lifting device 30 has been pushed out completely and the sheaves 34 mounted at the end of the piston 33 are at an extreme position on the guide rails 35 on the right in Fig. 2. At the same time, the lifting device 30 and the intermediate platform 20 connected to it have risen to their upper position. When the piston 33 is pulled into the hydraulic cylinder 32, the lifting device 30 and the intermediate platform 20 connected to it move downwards.

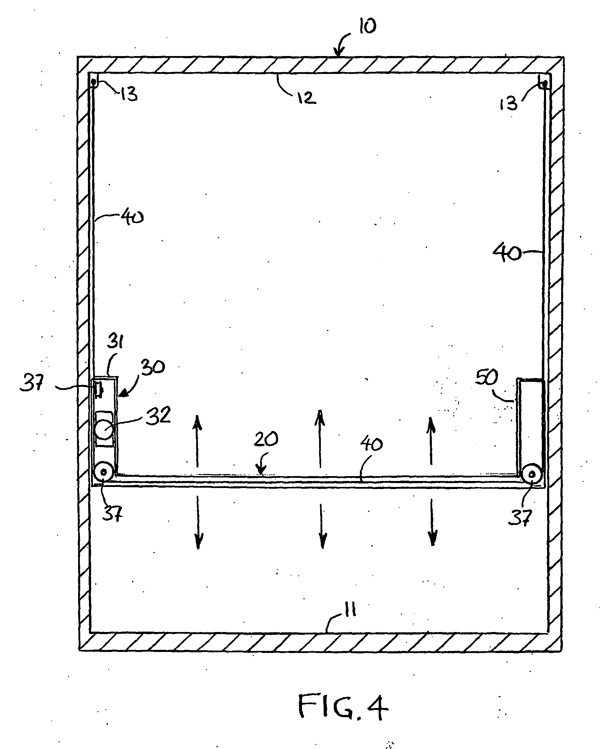

Fig. 4 presents a cross-sectional of the cargo container 10, intermediate platform 20 and intermediate platform lifting device 30 as seen from the end of the cargo container 10. It can be seen from Fig. 4 that the intermediate platform 20 is thin, leaving maximal spaces for the load both above and below it. The lifting device 30 of the intermediate platform 20 is placed inside a horizontal box beam 31 attached to the intermediate platform 20. In the figure, only the hydraulic cylinder 32 and the auxiliary sheaves 37 of the lifting device 30 are visible. Between the lifting device 30 and the anchorages 13 in the top 12 of the cargo container 10, the hoisting wire ropes 40 are passed over the auxiliary sheaves 37. From the lifting device 30 to the opposite edge or the intermediate platform 20, the hoisting wire rope runs inside the intermediate platform 20.

As shown in Fig. 4, the lifting device 30 is placed at one edge of the intermediate platform 20 inside the box beam 31, which also functions as a beam reinforcing the structure of the intermediate platform 20. Although no lifting device is needed at the opposite edge of the intermediate platform 20, only a space for the sheaves 37 for the hoisting wire rope 40, a corresponding horizontal box beam 50 has been added to that edge as well. Thus, the intermediate platform 20 has box beams 31 and 50 reinforcing the structure at both edges, so the intermediate platform 20 can be made still thinner and more advantageous for overall utilization of the space of the cargo container 10.

### ADDITIONAL REMARKS

It is obvious to the person skilled in the art that different embodiments of the invention may be varied within the scope of the claims presented below. Thus, it is also possible to place a different hydraulic actuator, such as e.g. a wire rope pump operated by a hydraulic motor, in the box beam at the edge of the intermediate platform. In any case, the essential point is that, by using at least one horizontal box beam, an advantageously thin intermediate platform structure is achieved.

### LIST OF REFERENCE NUMBERS

- 10: Cargo container
- 11: Bottom
- 12: Top
- 13: Anchorage
- 20: Intermediate platform
- 30: Lifting device
- 31: Box
- 32: Cylinder
- 33: Piston
- 34: Sheave
- 35: Guide rail
- 36: Holding block
- 37: Auxiliary sheave
- 40: Hoisting wire rope
- 50: Box beam

## Claims

1. An intermediate platform device (20, 30, 50), which can be lifted to a desired height in a cargo container (10), such as the cargo container of a truck or trailer, said intermediate platform device comprising
- an actual platform part (20), on which the objects are to be loaded,
- horizontal beams (31, 50) mounted in conjunction with the platform part (20) and supporting the platform part,
- and a lifting device (30) comprising hoisting wire ropes and a hydraulic actuator (32), such as a hydraulic cylinder, serving to move the sheaves (34) of the hoisting wire ropes,
**characterized in**
- **that** the actual platform part (20), on which the objects are to be loaded, is substantially a thin plate,
- in that the lifting device (30) comprising the hydraulic actuator (32), such as a hydraulic cylinder, is located at the edge of the platform part (20) in a box (31), which has the height dimension substantially greater than the thickness of the platform part (20),
- and in that the box (31) at the edge of the platform part (20) forms a horizontal beam (31) supporting the thin platform part (20),

2. An intermediate platform device (20, 30, 50) according to claim 1,
**characterized in**
- at the opposite edges, on both sides of the substantially thin platform part (20) and attached to it there are horizontal beams (31, 50), which have the height dimension substantially greater than the thickness of the platform part (20),
- that inside the box (31) of the first high horizontal beam there is a hydraulic actuator (32) of the lifting device (30) of the intermediate platform (20), such as a hydraulic cylinder,
- and that the box (50) of the second high horizontal beam at the opposite edge of the platform part (20) is a load-bearing beam supporting the actual platform part.

3. An intermediate platform device (20, 30, 50), according to claim 1 or 2,
**characterized in**
- **that** inside the first horizontal box (31) is the hydraulic cylinder (32) of the lifting device (30) of the intermediate platform (20), with sheaves (34) mounted at the end of the piston (33) of said cylinder,
- **that** the first ends of the hoisting wire ropes (40) are secured inside the first horizontal box (31),
- and **that** the second ends of the hoisting wire ropes (40) are passed over the sheaves (34) at the end of the piston (33) and over auxiliary sheaves (37) placed in the two horizontal boxes (31, 50) to anchorages (13) in the top (12) of the cargo container (10).

## Patentansprüche

1. Zwischenplattform-Vorrichtung (20, 30, 50), die sich in einem Lastenaufbau (10) wie zum Beispiel eines LKWs oder Anhängers in eine gewünschte Höhe anheben lässt, wobei die besagte Zwischenplattfom-Vorrichtung besteht aus
- einem eigentlichen Plattformteil (20), auf das die Lasten geladen werden sollen,
- mit dem Plattformteil (20) verbundenen und diesen abstützenden horizontalen Trägern (31, 50),
- und einer Hebevorrichtung (30) bestehend aus Hebedrahtseilen und einem hydraulischen Antrieb (32), wie zum Beispiel einem Hydraulikzylinder, der dazu dient, die Umlenkrollen (34) der Hebedrahtseile zu bewegen,
**dadurch gekennzeichnet,**
- **dass** der eigentliche Plattformteil (20), auf den die Lasten geladen werden sollen, im Wesentlichen aus einer dünnen Platte besteht,
- **dass** die Hebevorrichtung (30), die einen hydraulischen Antrieb (32) wie zum Beispiel einen Hydraulikzylinder umfasst, sich am Rand des Plattformteils (20) in einem Kasten (31) befindet, dessen Höhe wesentlich größer ist als die Dicke des Plattformteils (20),
- und **dass** der Kasten (31) am Rand des Plattformteils (20) einen horizontalen Träger (31) bildet, der das dünne Plattformteil (20) abstützt.

2. Zwischenplattfom-Vorrichtung (20, 30, 50) nach Anspruch 1, **dadurch gekennzeichnet,**
- **dass** auf den gegenüberliegenden Seiten beiderseits des im Wesentlichen dünnen Plattformteils (20) mit diesem verbundene horizontale Träger (31, 50) angebracht sind, deren Höhe wesentlich größer ist als die Dicke des Plattformteils (20),
- **dass** sich im Kasten (31) des ersten hohen horizontalen Trägers ein hydraulischer Antrieb (32) wie zum Beispiel ein Hydraulikzylinder für die Hebevorrichtung (30) der Zwischenplattform (20) befindet,
- und **dass** der Kasten (50) des zweiten hohen horizontalen Trägers am gegenüberliegenden Rand des Plattformteils (20) ein tragender Balken ist, der das eigentliche Plattformteil abstützt.

3. Zwischenplattfom-Vorrichtung (20, 30, 50) nach Anspruch 1 oder 2, **dadurch gekennzeichnet,**
- **dass** sich im ersten horizontalen Kasten (31) der Hydraulikzylinder (32) der Hebevorrichtung (30) der Zwischenplattform (20) befindet, wobei am Ende des Kolbens (33) des besagten Zylinders Umlenkrollen (34) angebracht sind,
- **dass** die ersten Enden der Hebedrahtseile (40) innerhalb des ersten horizontalen Kastens (31) fixiert sind,
- und **dass** die zweiten Enden der Hebedrahtseile (40) über die Umlenkrollen (34) am Ende des Kolbens (33) und über die Hilfsumlenkrollen (37) in den beiden horizontalen Kästen (31, 50) zu den Befestigungspunkten (13) an der Decke (12) des Lastenaufbaus (10) geführt werden.

## Revendications

1. Un dispositif de plate-forme intermédiaire (20, 30, 50), pouvant être levé à une hauteur désirée dans un conteneur de cargo (10), tel le conteneur de cargo d'un camion ou d'une remorque, ledit dispositif de plate-forme intermédiaire comportant
- une partie de plate-forme (20) proprement dite, sur laquelle les objets seront chargés,
- des poutres horizontales (31, 50) montées en connexion avec la partie de plate-forme (20) et soutenant la partie de plate-forme,
- et un dispositif de levage (30) comportant des câbles de levage et un actionneur hydraulique (32), tel un vérin hydraulique, servant à faire mouvoir les poulies de renvoi (34) des câbles de levage,
**caractérisé en ce**
- **que** la partie de plate-forme (20) proprement dite, sur laquelle les objets seront chargés, est essentiellement une plaque mince,
- en ce que le dispositif de levage (30) comportant l'actionneur hydraulique (32), tel un vérin hydraulique, est situé au bord de la partie de plate-forme (20) dans une boîte (31), dont la dimension hauteur est essentiellement plus grande que l'épaisseur de la partie de plate-forme (20),
- et en ce que la boîte (31) au bord de la partie de plate-forme (20) forme une poutre horizontale (31) soutenant la partie de plate-forme mince (20).

2. Un dispositif de plate-forme intermédiaire (20, 30, 50) selon la revendication 1,
**caractérisé en ce**
- **qu'**aux bords opposés, des deux côtés de la partie de plate-forme (20) essentiellement mince et attachée sur celle-ci, il y a des poutres horizontales (31, 50) dont la dimension hauteur est essentiellement plus grande que l'épaisseur de la partie de plate-forme (20),
- **qu'**à l'intérieur de la boîte (31) de la première poutre horizontale haute il y a un actionneur hydraulique (32) du dispositif de levage (30) de la plate-forme intermédiaire (20), tel un vérin hydraulique,
- et **que** la boîte (50) de la seconde poutre horizontale haute au bord opposé de la partie de plate-forme (20) est une poutre portante soutenant la partie de plate-forme proprement dite.

3. Un dispositif de plate-forme intermédiaire (20, 30, 50) selon la revendication 1 ou 2,
**caractérisé en ce**
- **qu'**à l'intérieur de la première boîte horizontale (31) se trouve le vérin hydraulique (32) du dispositif de levage (30) de la plate-forme intermédiaire (20), avec poulies de renvoi (34) montées à l'extrémité du piston (33) dudit vérin,
- **que** les premières extrémités des câbles de levage (40) sont fixées à l'intérieur de la première boîte horizontale (31),
- et **que** les secondes extrémités des câbles de levage (40) sont passées au dessus des poulies de renvoi (34) à l'extrémité du piston (33) et au dessus de poulies de renvoi auxiliaires (37) placées dans les deux boîtes horizontales (31, 50) vers des ancrages (13) dans le haut (12) du conteneur de cargo (10).
